# EUROPEAN PATENT SPECIFICATION

(11) **EP 2 775 815 B1**
(45) Date of publication and mention of the grant of the patent: **14.10.2015**
(21) Application number: 12791685.6
(22) Date of filing: 05.11.2012
(51) Int. Cl.: A01B 73/04

(54) **Foldable frame**
Faltbarer Rahmen
Cadre Pliable

(30) Priority: 11.11.2011 CZ 20110721
(43) Date of publication of application: 17.09.2014
(73) Proprietor: Farmet A.S., 55203 Ceská Skalice (CZ)
(72) Inventor: SMOLA, Tomás, 55204 Chvalkovice (CZ)
(74) Representative: Skoda, Milan
(86) International application number: PCT/CZ2012/000111
(87) International publication number: WO 2013/067981

(56) References cited:
- EP-A2- 2 380 423
- SU-A1- 424 522
- US-A- 4 415 043
- US-A- 6 003 615

## Description

### Technical Field

This invention relates to a folding device, especially the folding device for folding the working part of an agricultural machine comprising at least one stationary part and at least one folding part.

### State of the Art

Currently there are three known types of configuration of folding of the working parts of agricultural machinery from transport to working position. Especially these are for working parts of agricultural machinery used for soil cultivation, such as various cultivators, disc harrow, and the like.

The first of these design solutions is one rotary joint arranged on the upper sections of the folding and stationary parts. In the transport position, the folding section is held to the upper part of the stationary part. Given that the maximum overall width of a machine in the transport position must not exceed 3 meters, this design only allows for machines whose working widths do not exceed 6 metres.

The second known solution is stored in the machine arm which folds into the upper part of the stationary part at approximately the distance corresponding to the height of the hitch and working parts, ie the stationary and folding parts. In the transport position, the arm is held nearly perpendicular to the upper part of the stationary part. This design is limited in that the overall height of the machine in transport mode must not exceed 4 meters. Therefore, this design allows a maximum working width of approximatly 6.7 meters.

In the third known solution the working part of the machine is connected to a joint which is part of the machine frame, with no stationary part of the machine. In the working position, the folding parts are positioned below the joint. The machine is converted into the transport position by folding the working parts up 90 degrees to a vertical position. This design allows for a maximum working width of approximately 7 meters.

A seeding device is known from patent application DE 3837132 A1 in which two lateral seeding units can be moved over the machine frame for transport in such a way that it does not rotate. This design is not useful for very wide agricultural machines, as it does not significantly reduce the transport dimensions in comparison with the working dimensions.

From the next patent application EP 0420734 A1 is known the arrangement of a folding mechanism that also allows for folding of side parts without their rotation. The diference being that the folding mechanisms are distinct structures which allow folding to a higher position. This design does not provide a significant reduction in transport dimensions compared to working dimensions.

Another folding frame with the features of the preamble of claim 1 is known from document US 6 003 615 A.

As seen above, the drawback of the current state of technology is that the maximum transportation dimensions considerably limit the working widths of machines.

This disadvantage is largely eliminated by the design of the mechanism for folding working components of agricultural machines known from patent application CZ PV 2010-208. This folding device consists of at least two arms that are connected to the stationary and folding parts by four swivel mechanisms. Each of the arms consists of at least two side parts and at least one centre part. Invariably one part of the device is joined to a stationary part and the other to a folding part. The side parts and central parts are connected by at least one joining mechanism. In the working mode, the first arm of the folding mechanism is positioned above the second arm. Swivel joints are arranged so that the swivel device holds the second arm stable at the same level as the first swivel arm, at the same height as the stationary part. The first arm is designed so that the swivel joint of the second is held between its swivel joints. The swivel mechanism in the folding part of the second arm is located below the level of the swivel mechanism of the first arm. In the transport position, the first folding arm is placed under the second arm. The swivel mechanism of the second arm is placed so that it is held above the swivel mechanism of the first arm. The disadvantage of this device is that it is relatively complex and consists of a large number of components, which correspond to higher production costs. This device also demonstrates the certain instability of the folding parts while in the transport position. Another disadvantage is that each of the arms is held by a single swivel mechanism, resulting in faster wear of the rotating joints and reduced strength and static stability. This is also accompanied by some reduction in fixity of the folding parts.

The objective of the invention is to construct a folding device which will be solid, simple, and statically stable with a low production cost- all this while maximising working width while respecting transportation size limits.

### Fundamentals of the Invention

These deficiencies are largely eliminated by the invention which fulfills the objective by providing a foldable frame for an agricultural machine comprising at least one stationary part and at least one folding part, which is rotatably mounted on the stationary part by means of at least a first arm and a second arm, which pivotally connect the stationary part and the folding part each of the two arms presenting one swivel mounting at the stationary part and one swivel mountings at the folding part, according to the invention whose subject consists in the fact that in the working position of the folding part the first arm is positioned substantially above the second arm and the swivel mountings are arranged so that the swivel mounting of the stationary part of the second arm is located vertically at the level which is below the level of the swivel mounting of the first arm at the stationary part and so that swivel mounting on the folding part of the second arm is located vertically below the level of swivel mounting on the first arm, whereas in the transport mode the first arm is positioned substantially below the second arm and the swivel mounting of the folding part of the second arm is located vertically above the level of the swivel mounting of the folding part of the first arm. The advantage of the above arrangement is that it allows for either a further significant reduction in transport dimensions of the agricultural machine or for an increase in the overall working width of the machine, and simultaneously, stability of the folding part in the transport mode is increased.

It is adventageous when an arm with a swivel mounting is connected by at least two joints, whereas the most preferred arrangement is where at least two suspended parts of the arm are joined by swivel mountings. This brings additional strenght and structural stability while reducing wear as compared to currently known technology.

It is also very advantageous when the arm has at least one insert positioned between the supporting parts. Such a placement of inserts between the supporting parts substantially increases torsional strenght of the arm.

It is a further advantage when the arms are shaped, preferably with the same shape. This allows one to optimize the location of the swivel mountings thereby reducing transport dimensions of the agricultural machinery and increasing its overall working width.

In the preferred arrangement of the foldable device, at least four pairs of symmetrically placed swivel mountings are in the stationary and folding parts of the macine arms. This arrangement is optimal in terms of overall torsional strength of the machine.

Further it is advantageous to increase overall rigidity, by having each pair of arms connected by at least one torsion tube. The torsion tube is optimally held in the swivel mounting of the arm either in the stationary or folding part.

It is advantageous if the device contains at least one lifting means, which ensures the redeployment of the folding parts of the machine.

As per the invention, the device is simple and cheap to produce while in comparison with known technology, allows for further reduction in size after the folding parts have been folded while making possible additional increases in the working width of the machine, while maintaining transport dimension regulations. Furthermore torsional strenght of the entire machine is increased as is wear resistance. The design of the foldable frame also contributes to problem-free transportability and increased over-all safety of the agricultural machine.

### Overview of the Figures

The invention will be further elucidated by the use of drawings, in which Fig. 1 shows the axonometric view of the general arrangement of the foldable frame in working state of the agricultural machine, Fig. 2 shows a front view of the foldable frame in working state of the agricultural machine, Fig. 3 shows the front view of the agricultural machine in the working position, Fig. 4 shows a front view of the foldable frame in the transport state of the agricultural machine and Fig. 5 shows the front view of the agricultural machine in transport state.

### Example of the Invention

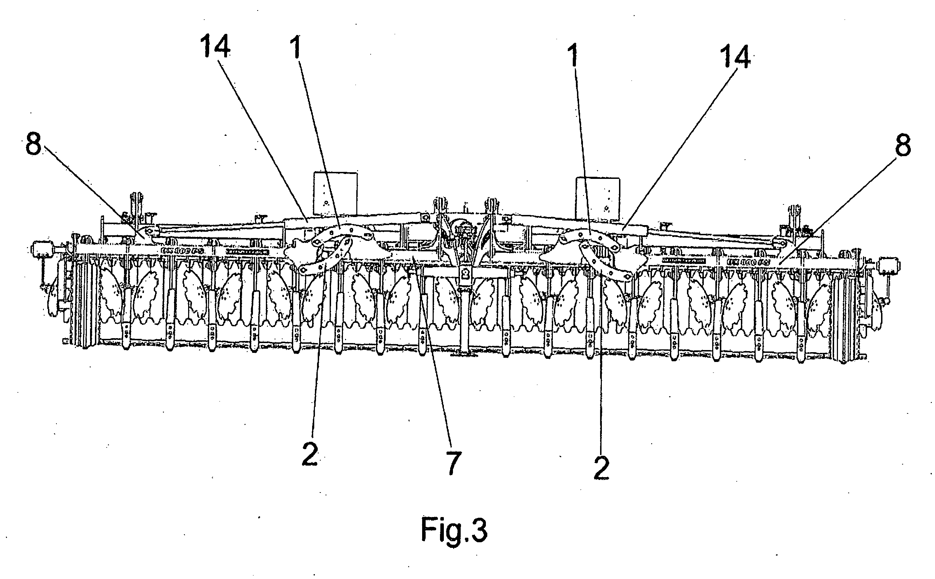

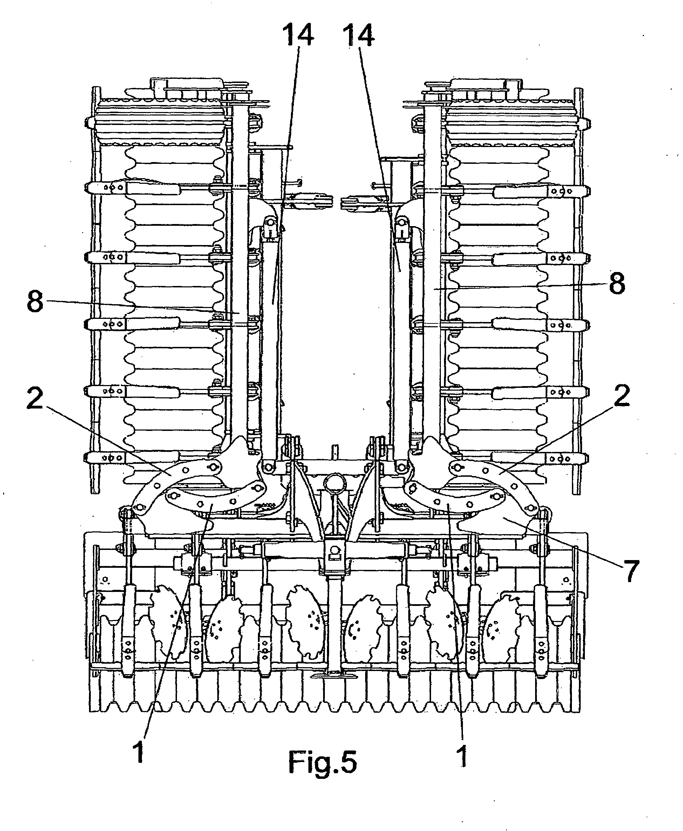

The agricultural machine (Fig. 3, Fig. 5) contains one stationary part 7 and two, symmetrically positioned, folding part 8. Two foldable frames are arranged on this agricultural machine.

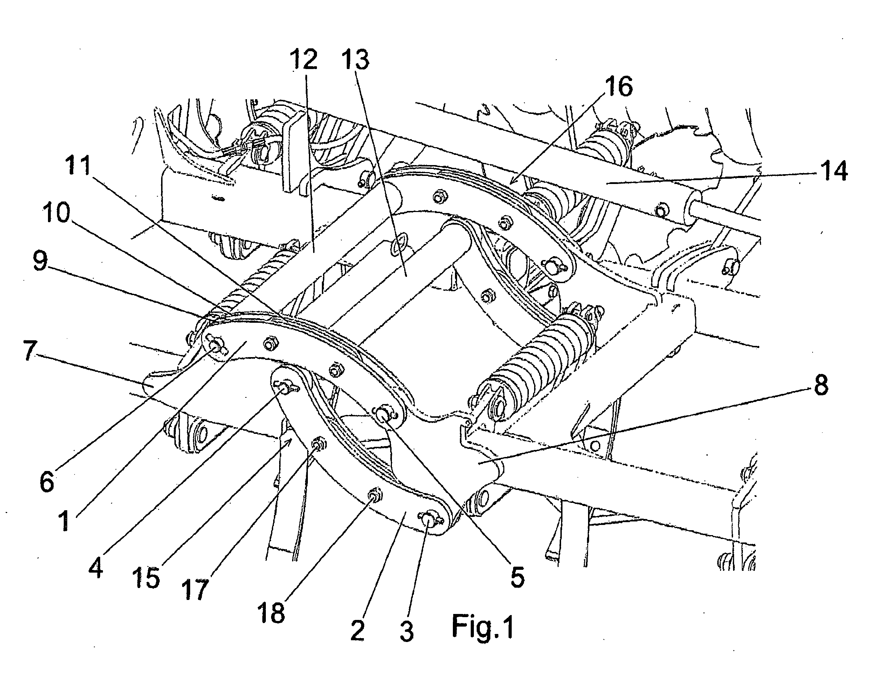

Each of the folding parts 8 (Fig. 1) is rotatably mounted on the stationary part 7 by means of four pairs 15,16 of symetrically arranged arms 1,2 whereas each pair 15,16 of arms 1,2 is joined to the stationary part 7 and the folding part 8 by four swivel mountings 3,4,5,6.

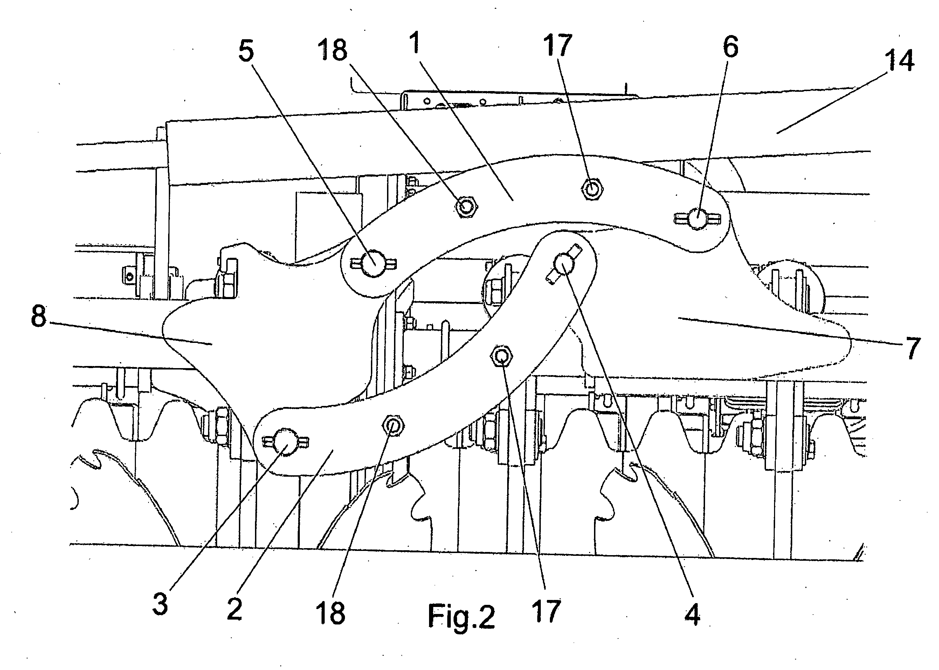

In the working position (Fig. 1, Fig. 2, Fig. 3) on both folding parts 8, each pairs 15,16 of arms 1,2, is positioned with the first arm 1 above the second arm 2 and the swivel mountings 3,4,5,6 are arranged so that the swivel mounting 4 of the second arm 2 is located in the stationary part 7 so that the level is below the level of the swivel mounting 6 of the first arm 1 and so that swivel mounting 3 on the folding part 8 of the second arm 2 is located below the level of swivel mounting 5 on the first arm 1.

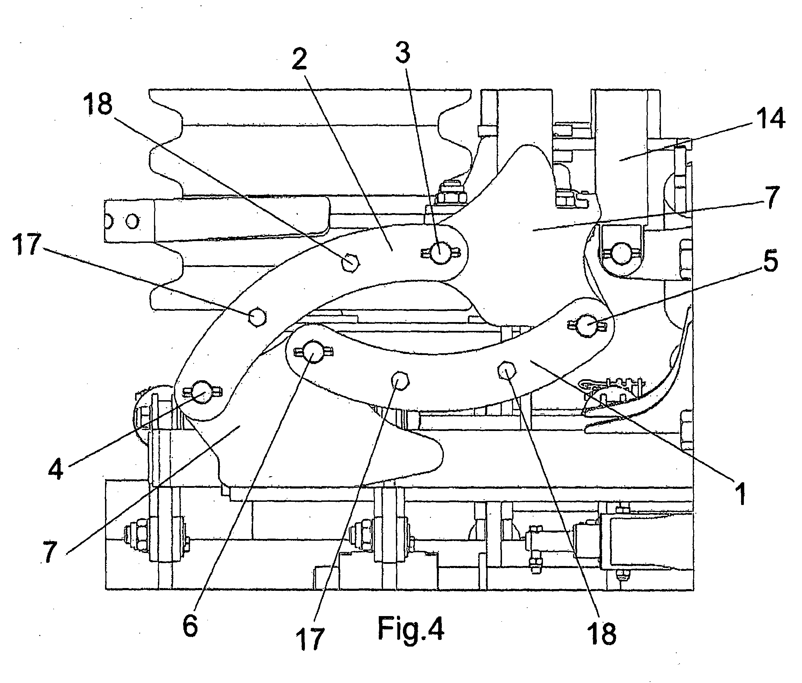

In the transport mode (Fig.4, Fig.5) the two folding parts 8, where both folding parts 8 have been moved approximately 90° upwards, the first arm 1 is located below the second arm 2. The swivel mounting 4 of the second arm 2 is, as in the working position in the stationary part 7 located below the level of the swivel mounting 6 of the first arm 1. The swivel mounting 3 of the second arm 2 is however in the folding part 8, located above the level of the swivel mounting 5 of the first arm 1.

Each arm is 1,2 is joined to the swivel mountings 3,4,5,6 by two joints whereas swivel mountings 3,4,5,6 are joined to two supporting parts 9,10 of the arms 1,2. Between the supporting parts 9,10 of the arms 1,2 an insert 11 is positioned which is fastened to the supporting parts 9,10 by twin screw connections 17,18. The arms 1,2 are made in a shaped version.

Both pairs 15,16 of the arms 1,2 are reciprocally connected by two torsion tubes 12,13, which are positioned between the swivel mountings 4,6, which are parts of the stationary part 7 of the machine.

Each of the foldable frames also comprises one lifting means 14, which is a hydraulic piston located in the frame of the stationary part 7 and the folding part 8 of the machine.

### Industrial Application

The foldable frame according to the invention can be used for folding the working parts of agricultural machinery, especially for folding the working parts of agricultural machinery for tillage.

### List of Reference Marks

- 1: arm I
- 2: arm II
- 3: swivel mounting I
- 4: swivel mounting II
- 5: swivel mounting III
- 6: swivel mounting IV
- 7: stationary part
- 8: folding part
- 9: supporting part I
- 10: supporting part II
- 11: insert
- 12: torsion tube I
- 13: torsion tube II
- 14: lifting means
- 15: pairs of arms I
- 16: pairs of arms II
- 17: screw connection I
- 18: screw connection II

## Claims

1. A foldable frame for an agricultural machine comprising at least one stationary part (7) and at least one folding part (8), which is rotatably mounted on the stationary part (7) by means of at least a first arm (1) and a second arm (2), which pivotally connect the stationary part (7) and the folding part (8) each of the two arms presenting one swivel mounting (3,5) at the stationary part (7) and one swivel mountings (4,6) at the folding part (8), wherein in the working position of the folding part (8) the first arm (1) is positioned substantially above the second arm (2) and the swivel mountings (3,4,5,6) are arranged so that the swivel mounting (4) of the stationary part (7) of the second arm (2) is located vertically at the level which is below the level of the swivel mounting (6) of the first arm (1) at the stationary part (7) and so that swivel mounting (3) on the folding part (8) of the second arm (2) is located vertically below the level of swivel mounting (5) on the first arm (1), **characterized in that** in the transport mode the first arm (1) is positioned substantially below the second arm (2) and the swivel mounting (3) of the folding part (8) of the second arm (2) is located vertically above the level of the swivel mounting (5) of the folding part (8) of the first arm (1).

2. The foldable frame as per claim 1, **characterized by** the arm (1,2) being joined to the swivel mountings (3,4,5,6) by at least two joints.

3. The folding device as per any of the preceding claims, **characterized by** the arm (1,2) containing at least two supporting parts (9,10) joined to the swivel mountings (3,4,5,6).

4. The foldable frame as per claim 3, **characterized by** the arm (1,2) containing at least one insert (11) located between the supporting parts (9,10).

5. The foldable frame as per any of the preceding claims, **characterized by** the arms (1,2) being made shaped.

6. The foldable frame as per any of the preceding claims, **characterized by** containing at least four pairs (15,16) of symmetrically rotatably mounted arms (1,2) in a stationary part (7) and folding part (8).

7. The foldable frame as per claim 6, **characterized by** that each of the pairs (15,16) of the arms (1,2) are connected by at least one torsion tube (12,13).

8. The foldable frame as per claim 6, **characterized by** the torsion tube (12,13) is mounted in the swivel mountings (3,4,5,6) of the arms (1,2) in the stationary part (7) or the folding parts (8).

9. The foldable frame as per any of the preceding claims, **characterized by** further comprising at least one lifting means (14).

## Patentansprüche

1. Der Faltbarer Rahmen einer landwirtschaftlichen Maschine, die mindestens einen stabilen Teil (7) und mindestens einen kippbaren Teil (8) enthält, der auf dem stabilen Teil (7) mit mindestens zwei Armen (1,2) schwenkbar beruht, die mit dem stabilen Teil (7) und dem kippbaren Teil (8) durch vier drehbare Sitze (3,4,5,6) verbunden sind, wo in der Arbeitslage des kippbaren Teils (8) das erste Arm (1) oberhalb des anderen Arms (2) untergebracht ist, und die drehbaren Sitze (3,4,5,6) so angebracht sind, dass der drehbare Sitz (4) des anderen Armes (2) in dem stabilen Teil (7) oberhalb des Höhenniveaus des drehbaren Sitzes (6) des ersten Armes (1) untergebracht ist, und der drehbare Sitz (3) des anderen Armes (2) in dem klappbaren Teil (8) unterhalb des Höhenniveaus des drehbaren Sitzes (5) des ersten Armes (1) untergebracht ist, **dadurch gekennzeichnet, dass** in der Transportlage des kippbaren Teils (8) das erste Arm (1) unterhalb des anderen Armes (2) und der drehbare Sitz (3) des anderen Armes (2) in dem kippbaren Teil (8) oberhalb des Höhenniveaus des drehbaren Sitzes (5) des ersten Armes (1) untergebracht sind.

2. Der Faltbarer Rahmen, laut Anspruchs 1, **dadurch gekennzeichnet, dass** das Arm (1,2) mit dem drehbaren Sitz (3,4,5,6) mindestens durch zwei Stoßstellen verbunden ist.

3. Der Faltbarer Rahmen, nach einem der vorherigen Ansprüche, **dadurch gekennzeichnet, dass** das Arm (1,2) mindestens zwei Tragteile (9,10), die mit drehbaren Sitzen (3,4,5,6) verbunden sind, enthält.

4. Der Faltbarer Rahmen, nach dem Anspruch 3, **dadurch gekennzeichnet, dass** das Arm (1,2) mindestens eine Einlage (11) enthält, die zwischen den Tragteilen (9,10) untergebracht ist.

5. Der Faltbarer Rahmen, nach einem der vorherigen Ansprüche, **dadurch gekennzeichnet, dass** die Arme (1,2) in einer Form ausgeführt werden.

6. Der Faltbarer Rahmen, nach einem der vorherigen Ansprüche **dadurch gekennzeichnet, dass** sie mindestens vier in Paaren (15,16) symmetrisch in dem stabilen Teil (7) und dem kippbaren Teil (8) drehbar untergebrachte Arme (1,2) enthält.

7. Der Faltbarer Rahmen, nach dem Anspruch 6, **dadurch gekennzeichnet, dass** einzelne Paare (15,16) der Arme (1,2) mindestens durch ein Torsionsrohr (12,13) verbunden sind.

8. Der Faltbarer Rahmen, nach dem Anspruch 6, **dadurch gekennzeichnet, dass** das Torsionsrohr (12,13) in dem drehbaren Sitz (3,4,5,6) des Armes (1,2) im stabilen Teil (7) oder kippbaren Teil (8) untergebracht ist.

9. Der Faltbarer Rahmen, nach einem der vorherigen Ansprüche, **dadurch gekennzeichnet, dass** sie ferner mindestens ein Hebemittel (14) enthält.

## Revendications

1. Le cadre pliable d'une machine agricole contenant au moins une partie fixe (7) et au moins une partie basculante (8) qui se trouve sur la partie fixe (7) disposée de manière pivotante à l'aide au moins de deux bras (1,2) qui sont joints à la partie fixe (7) et à la partie basculante (8) par quatre fixations pivotantes (3,4,5,6) où dans la position de travail de la partie basculante (8) le premier bras (1) est fixé au-dessus du deuxième bras (2) et les dispositions pivotantes (3,4,5,6) sont agencées de façon que la disposition pivotante (4) du deuxième bras (2) se trouve dans la partie fixe (7) placé au-dessous du niveau de la fixation pivotante (6) du premier bras (1), et la fixation pivotante (3) du deuxième bras (2) se trouve dans la partie basculante (8) placé au-dessous du niveau de la fixation pivotante (5) du premier bras (1), **caractérisé en ce que,** dans la position de transport de la partie basculante (8) le premier bras est (1) placé au-dessous du deuxième bras (2), et la fixation pivotante (3) du deuxième bras (2) se trouve dans la partie basculante (8) placé au-dessous du niveau de la fixation pivotante (5) du premier bras (1).

2. Le cadre pliable, selon la revendication 1, **caractérisé en ce que,** le bras (1,2) est joint à la fixation pivotantes (3,4,5,6) au moins par deux joints.

3. Le cadre pliable, selon une des revendications précédentes, **caractérisé en ce que,** le bras (1,2) contient au moins deux parties porteuses (9,10) jointes aux fixations pivotantes (3,4,5,6).

4. Le cadre pliable, selon la revendication 3, **caractérisé en ce que,le** bras (1,2) contient au moins une pièce d'insertion (11) placée entre les parties porteuse (9,10).

5. Le cadre pliable, selon une des revendications précédentes, **caractérisé en ce que,** les bras (1,2) sont profilés.

6. Le cadre pliable, une des revendications précédentes **caractérisé en ce que,** contient au moins quatre, par paire, (15,16), de façon symétrique dans la partie fixe (7) et dans la partie basculante (8) bras placé de façon pivotante (1,2).

7. Le cadre pliable, selon la revendication 6, **caractérisé en ce que,** des paires isolées (15,16) des bras (1,2) sont joints au moins par une tube de torsion (12,13).

8. Le cadre pliable, selon la revendication 6, **caractérisé en ce que,** la tube de torsion (12,13) est placée dans la fixation pivotante (3,4,5,6) du bras (1,2) dans la partie fixe (7) ou dans la partie basculante (8).

9. Le cadre pliable, une des revendications précédentes, **caractérisé en ce que,** puis il contient au moins un dispositif de levage (14).
